(19) Europäisches Patentamt

European Patent Office

Office européen des brevets

(11) Publication number: **0 497 393 A1**

## EUROPEAN PATENT APPLICATION

(21) Application number: **92200051.8**

(22) Date of filing: **10.01.92**

(51) Int. Cl.5: **G03D 15/04**

(30) Priority: **31.01.91 EP 91300773**

(43) Date of publication of application:
**05.08.92 Bulletin 92/32**

(84) Designated Contracting States:
**BE DE FR GB**

(71) Applicant: **AGFA-GEVAERT naamloze vennootschap**
**Septestraat 27**
**B-2640 Mortsel(BE)**

(72) Inventor: **De Wandel, Carolus Ludovicus**
**Keizershoek 185**
**B-2550 Kontich(BE)**

(54) **Film splicing.**

(57) A system for fusion splicing of perforation-indexed polyester-base film lengths in which two bed plates (41, 43) to receive end portions of the film lengths to be joined each include at least one indexing pin (47) engaging an indexing perforation and thereby locating the film in the precise position required for cutting and/or splicing. The system makes it possible to ensure that each splice occurs in a space between adjacent image frames and thus does not diminish the projected image quality.

FIG. 1

# BACKGROUND OF THE INVENTION

## Field of the invention

This invention relates to film splicing, i.e. to the joining of lengths of photographic film to one another. It is particularly concerned with ensuring that the respective ends of film lengths to be joined are accurately located relative to each other during the splicing operation.

The main demands for film splicing arise in the motion picture industry. The requirements include the joining of unexposed film, for example to provide extensive runs of film to permit copying of large reels or to accommodate prolonged shooting operations, or the joining of lengths of exposed film, for example in editing operations. Generally similar requirements also occur with microfilm.

The traditional method of splicing has been to secure together overlapping ends of film lengths by means of a suitable cement. This remains a much used procedure, especially in the joining of triacetate film stock. With polyester film stock however cement joints tend to be of insufficient strength. Alternative splicing techniques have therefore been devised for polyester film in which the overlapping film lengths are fused together without the use of cement as such. One of the most successful fusing systems is ultrasonic splicing in which ultrasound is applied through an anvil to the overlapping film ends while a motor-driven roller presses the overlapping ends together.

Polyester film base provides advantages over triacetate film base in being stronger, more resistant to tearing and having a longer storage life. It also has better dimensional stability in being less hygroscopic and containing no evaporable solvent residues. It is thus particularly capable of withstanding robust and prolonged usage while retaining a high level of precision in exposed image frame size and perforation pitch. The ability of the film base to withstand rough treatment does however increase the need to ensure a similarly high strength of joint.

Because of its special qualities there is often a need to distinguish polyester film base from triacetate. One established system to achieve this is provided by indexing perforations, each in the form of a small circular hole between sprocket holes at regular intervals along one side of the film. The indexing perforations not only give an immediate visual indication of the type and alignment of film but can also be detected by touch and thus allow the film to be both identified and correctly aligned even in the darkroom. In the preferred format (illustrated in the accompanying Figures) the perforations are located on the side opposite to that which carries (or is intended to carry) the sound track. It is also preferred that the intervals between perforations are equivalent to the distance from one exposed image frame to the next. For example for 35 mm width film stock there is one index hole (and one exposed image) for each four sprocket holes along the indexed side of the film.

Splicing requires as a first step the accurate cutting of the two lengths of film to be joined, followed by the step of placing the cut lengths end to end with a slight overlap. In fusion joining the next step is to apply heat and pressure to the overlapping portions. Fusion joining has the advantage that the required strength of joint is achieved almost instantaneously and the joined lengths can be immediately withdrawn for further processing. Various types of splicing apparatus are commercially available. Most of them include one or more cutter blades for the precise cutting of the film ends and include bed plates to receive the respective film ends for the fusion step. Some versions include projections from the bed plates which engage the sprocket holes and thereby assist in achieving the desired alignment and overlap. The means for achieving fusion is typically an anvil with an associated ultrasonic horn and a ribbed roller which is moved across the overlapping ends to press them against the anvil while the ultrasound is applied. The bed plates are shaped and located to permit the film ends to be brought into contact with the fusion means.

# SUMMARY OF THE INVENTION

## Object of the invention

The present invention utilises the indexing perforations of polyester film to ensure the precise cutting, alignment and splicing of the respective ends to be spliced.

## Statement of the invention

According to the present invention there is provided film-splicing apparatus for joining first and second lengths of perforation-indexed polyester-base film by applying a fusion joint to overlapping ends of the said lengths, which apparatus comprises means to effect the fusion, a first bed plate to receive an end portion of the first film length and a second bed plate to receive an end portion of the second film length, characterized in that each bed plate is provided with at least one indexing pin to engage an indexing perforation in the film.

The invention further provides a process for splicing first and second lengths of perforation-indexed polyester-base film by locating the first length of film in a first bed plate and locating the second length of film in a second bed plate and applying a fusion joint to overlapping ends of the said lengths, characterized in that the film lengths are precisely located relative to each other for the fusion by at least one indexing pin which engages an indexing perforation in the film.

The invention offers the advantage that the film is always precisely located in relation to the indexing holes. Since the convention in polyester film indexing is that the indexing holes occur at the same interval as exposed image frames the invention thus permits the splices to be consistently located in precisely the same position relative to the exposed images. Most particularly it means that each splice can reliably be located in the separation space between two adjacent images, rather than through an image, and thus cause no interfererce whatsoever to the projected image. Provided that the pin alignment ensures that the splice occurs between adjacent images, it is not essential that the indexing hole and the splice coincide but in general such coincidence between the indexing holes and splices is the preferred configuration.

If the film is a so-called "printing" film, i.e. a positive type of film for projection of a motion picture in the cinema, the printing in the laboratory of a duplicate negative for release printing may be made to occur in such a way that the separations between adjacent images on the negative coincide with the indexing perforations, and thus with the splices, in the printing film. The operator must make an appropriate initial check or adjustment of the printer to obtain the desired setting, but once the setting has been made the printing can continue without interruption, the exposure being automatically such that two adjacent frames of the duplicate negative are exposed at either side of the splice of the positive printing film. In this way each splice of the printing film is located between images.

The invention is applicable to substantially any type of splicing apparatus which effects fusion of overlapping film ends. With a view to achieving a strong joint the fusion means is preferably an ultrasonic system, typically an ultrasonic horn associated with a metal anvil to transmit the fusion energy to the film and having a roller, which can be smooth or grooved, to press the film against the anvil while the horn is in operation.

Other known features such as integral film cutters and film clamps can be present in the splicing apparatus if required.

The film bed will normally be a flat-based channel member having a width substantially the same as the film to be spliced. Some types of splicing apparatus include interchangeable film beds for different film widths.

The space between adjacent sprocket holes dictates that the indexing perforations are relatively small. According to the usual indexing convention they are circular holes with a diameter one half of the distance between adjacent sprocket holes. They are usually produced in the film stock by a punch. The indexing pins for these holes should have a cross-sectional shape which fits easily but precisely within the hole. Use of a punch of circular cross-section with the same diameter as the indexing pin will normally ensure a hole which fits precisely to the pin while not being difficult to remove therefrom.

One or more of a second type of pins can be attached to each film bed to engage with sprocket holes and thereby assist in accurately aligning the film for the cutting and/or fusion step. For convenience of description these pins are described herein as "sprocket pins". They preferably have a circular cross-sectional shape.

The present invention resides in providing one or more suitably shaped pins to engage with the indexing holes. These pins are described herein as "indexing pins". They preferably have substantially the same cross-sectional shape as the indexing holes. If desired, sprocket pins can be located on both sides of the film bed so as to engage sprocket holes on both sides of the film. The indexing pins are however disposed at only one side of the film bed, thereby to ensure that the film can only be inserted with the indexing holes at that side and thus ensuring a consistent disposition of film in the apparatus.

In one preferred configuration the film bed has one or more sprocket pins at one side only and one or more indexing pins at the other side only. This ensures both a firm hold and consistent film alignment. A particularly convenient arrangement is provided by a single sprocket pin at one side of the film bed and a single indexing pin at the other side of the film bed. The small number of pins in this arrangement facilitates the rapid insertion of film in a precisely defined disposition. Most preferably the sprocket pin and the indexing pin are located on the respective sides of the film bed at a sufficient distance from each other along the length of the film bed to permit easy manipulation of the film into position, e.g. by employing one hand to place the film over the indexing pin and next the other hand to place the film over the sprocket pin. The distance between the sprocket pin and the corresponding indexing pin preferably equals at least two image frames. With 35 mm width film the sprocket pin is preferably about five sprocket holes away from the cut end and the indexing pin about four indexing holes away from the cut end.

The invention thus provides a particularly convenient and precise means for effecting splicing of polyester film stock. It permits splices to be made quickly and accurately, even in the darkroom, and avoids the unintentional fusion joining of triacetate film stock. It achieves for motion picture film and also for microfilm the great advantage that the splices do not interfere with the displayed image.

BRIEF DESCRIPTION OF THE DRAWINGS

One version of film splicing apparatus is described below with reference to the accompanying drawings, in which:

Figure 1 is a general plan view of the apparatus on a scale approximately half that of Figures 2 to 4;

Figure 2 is a view of a short length of unexposed indexed polyester film;

Figure 3 is a view of a portion of the Figure 1 apparatus showing a length of exposed indexed polyester film in position prior to splicing;

Figure 4 is a view of a spliced length of exposed indexed polyester film;

Figure 5 is a view of a small part of a length of exposed indexed polyester film on a much larger scale than the other figures;

Figure 6 is a view, on the same scale as Figure 5, of two overlapping end portions of exposed indexed polyester film prior to splicing.

The illustrated apparatus is basically of a type (T 3001) marketed by the Metric Splicer and Film Company Inc of Anaheim, California, USA but incorporating film-locating modifications as described in detail below.

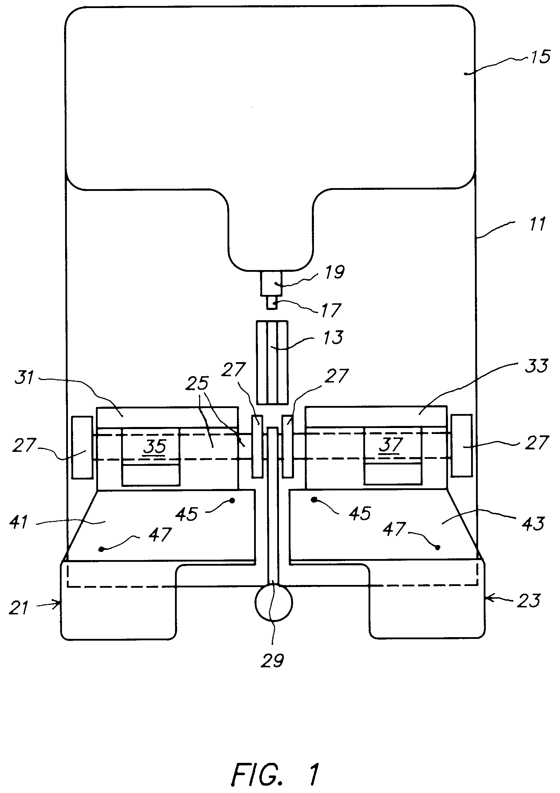

A base assembly 11 supports an anvil block 13 powered by an ultrasonic horn (not shown in the Figures) located beneath the anvil. A motor assembly 15, also supported on the base 11, houses a roller 17 on a sliding arm 19 aligned so as to drive the roller 17 over the upper surface of the anvil block 13. Two hinged blocks 21 and 23 to receive film to be spliced are free to rotate independently of each other about a pivot bar 25 attached to the base 11 by fixed lugs 27. A cutter bar 29 is also mounted on the pivot bar 25 and has an associated fixed blade (not shown) for precise cutting of lengths of film. The hinged blocks 21 and 23 have associated hinged clamps, respectively 31 and 33, attached by integral hubs, respectively 35 and 37, to the pivot bar 25 and also free to rotate about the bar 25 independently of each other and independently of the blocks 21 and 23. The clamps 31 and 33 are shown in Figure 1 in the raised position in which they permit insertion of film.

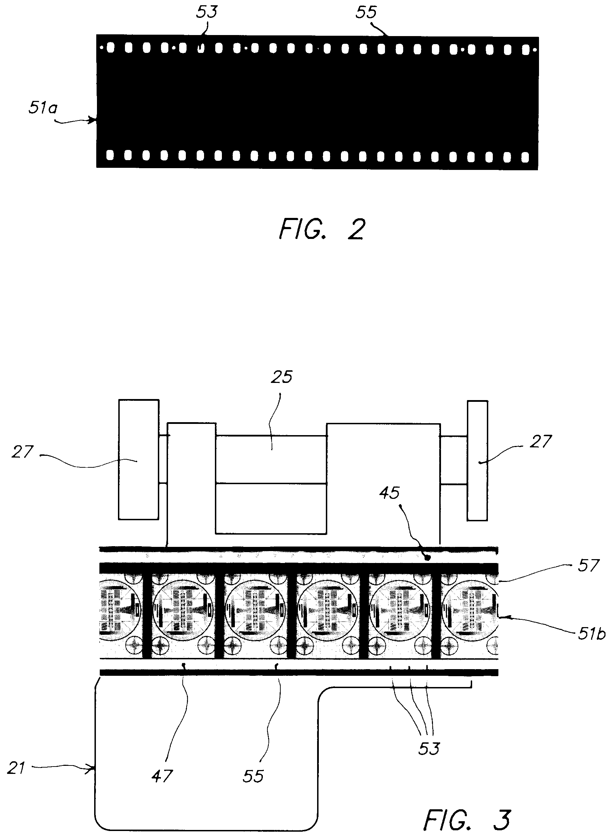

Film 51 to be spliced with the illustrated apparatus is perforation-indexed 35 mm polyester film stock for motion picture applications. A portion of unexposed film 51a is shown in Figure 2 and a portion of exposed film 51b in Figure 3. All the illustrated versions of the film 51 include sprocket holes 53 and indexing holes 55. As shown in Figure 3 the perforation convention is for the indexing holes 55 to be located on the side opposite to the sound track 57. In such 35 mm stock there is an interval of four sprocket holes 53 between adjacent indexing holes 55.

The blocks 21 and 23 include channels 41 and 43 which serve as beds to receive lengths of film 51 for cutting and splicing. Compared with previous proposals the apparatus differs in the type and location of the film locator pins. Thus the channels 21 and 23 each contain a locator (sprocket) pin 45 projecting upwards from the bed surface. The channels 21 and 23, however, each further contain a locator (indexing) pin 47 projecting upwards from the bed surface and having a circular cross-section corresponding to the shape of the indexing holes 55. The disposition of the pins 45 and 47 relative to each other and to the respective channel 21 or 23 is determined by the particular film size to be cut and spliced.

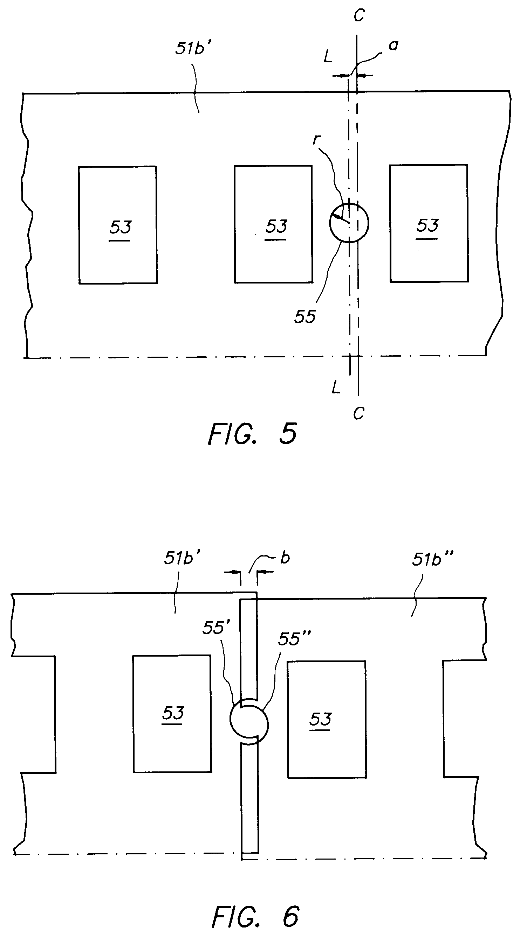

In making a splice according to the invention a length of film 51b' is positioned, emulsion side upwards, in the channel 41 of the left hand block 21 with the pins 45 and 47 engaging respective holes 53 and 55 in the film. The location of the pins 45 and 47 ensures that the film 51b' is correctly placed for making a clean and accurate cut of the end to be joined. With the film 51b' in position the clamp 31 is lowered onto the film and secured to the block 21. The cutter arm 29 is pressed against the fixed blade to effect the cut. To ensure the required degree of overlap for a fusion joint the pin positions locate the film 51b' so that the line of cut C-C (see Figure 5) is through an indexing hole 55 to the right of a line L-L through its centre, the distance $a$ between the lines CC and L-L being half the radius $r$ of the hole. A second length of film 51b'' is similarly placed in the block 23, clamped and then cut through an indexing hole 55 at a distance of half a radius to the left of its centre. The cuts thus create three quarters of an indexing hole at the respective film ends (55' and 55'', in Figure 6).

Both blocks 21 and 23, each with their associated film and clamp, are then rotated some 180° from the cutting position to the splicing position, bringing the cut ends of film 51b' and 51b'' to the anvil 13. The pivot bar 25 and lugs 27 include cam members (not illustrated) which move the respective film ends 51b' and 51b'' towards each other during the rotation and into an overlapping position on the anvil 13. The overlapping distance $b$ is equal to the radius $r$ of the hole 55 such that the two three-quarter holes 55' and 55'' at the film ends overlap to form a complete circle. For clarity of illustration in Figure 6 the overlapping film ends 51b' and 51b'' are shown as slightly out of alignment in a vertical direction. It is emphasized that such misalignment does not occur when the ends are in position on the anvil 13.

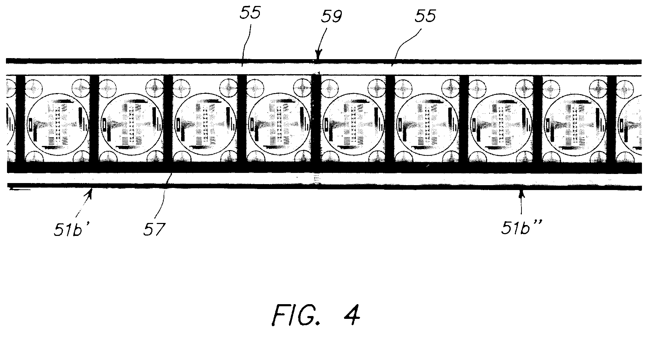

With the respective film ends 51b' and 51b'' in position on the anvil 13 the ultrasonic horn and roller 17 are then activated. The roller 17 runs across the full width of the overlapping film ends and then back to the housing 15, applying pressure to the film as it is fused by the ultrasound. The thus joined lengths 51b' and 51b'' are then removed from the blocks 21 and 23 as a joined length. Figure 4 shows such a joined length of exposed polyester film 51b in which the splice, indicated by numeral 59, runs through the hole 55 and between adjacent exposed images.

## Claims

1. Film-splicing apparatus for joining first and second lengths of perforation-indexed polyester-base film by applying a fusion joint to overlapping ends of the said lengths, which apparatus comprises means to effect the fusion, a first bed plate to receive an end portion of the first film length and a second bed plate to receive an end portion of the second film length, characterized in that each bed plate (41, 43) is provided with at least one indexing pin (47) to engage an indexing perforation (55) in the film.

2. Film-splicing apparatus as claimed in claim 1, in which the fusion means is an ultrasonic system (13, 17).

3. Film-splicing apparatus as claimed in claim 1 or claim 2, in which each bed plate is a flat-based channel member (41, 43) having a width substantially the same as the film to be spliced.

4. Film-splicing apparatus as claimed in claim 1 or claim 2, having interchangeable bed plates for different film widths.

5. Film-splicing apparatus as claimed in any preceding claim, in which the indexing pins (47) have substantially the same cross-sectional shape as the indexing holes.

6. Film-splicing apparatus as claimed in any preceding claim, in which each bed plate is additionally provided with one or more sprocket pins (45) to engage with sprocket holes in the film.

7. Film-splicing apparatus as claimed in any preceding claim, having one or more sprocket pins located on both sides of the bed plate so as to engage sprocket holes on both sides of the film.

8. Film-splicing apparatus as claimed in any preceding claim, in which the indexing pins (47) are disposed at only one side of the bed plate.

9. Film-splicing apparatus as claimed in claim 8, in which the sprocket pins (45) are disposed at the other side of the bed plate.

10. Film-splicing apparatus as claimed in claim 9, in which each bed plate has a single sprocket pin (45) at one side and a single indexing pin (47) at the other side.

11. Film-splicing apparatus as claimed in claim 10, in which the sprocket pin (45) and the indexing pin (47) are located on their respective sides of the bed plate at a sufficient distance from each other along the length of the bed plate to permit easy manipulation of the film into position.

12. Film-splicing apparatus as claimed in claim 11, in which the distance between the sprocket pin (45) and the corresponding indexing pin (47) equals at least two image frames.

13. A process for splicing first and second lengths of perforation-indexed polyester-base film by locating the first length of film in a first bed plate and locating the second length of film in a second bed plate and applying a fusion joint to overlapping ends of the said lengths, characterized in that the film lengths are precisely located relative to each other for the fusion by at least one indexing pin which engages an indexing perforation in the film.

FIG. 1

FIG. 2

FIG. 3

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 029 538 (W.I. VANCE, JR) <br> * column 1, line 1 - column 5, line 44 * <br> * figures 1-3 * <br> --- | 1-3,13 | G03D15/04 |
| A | US-A-4 468 268 (B. RALPH) <br> * column 4, line 19 - line 31; figure 1 * <br> --- | 1,13 | |
| A | FR-A-2 063 629 (M.R. PERNICENI) <br> * page 3, line 10 - line 23; figure 2 * <br> ----- | 1,13 | |

**TECHNICAL FIELDS SEARCHED (Int. Cl.5)**

G03D

The present search report has been drawn up for all claims

| Place of search | Date of completion of the search | Examiner |
|---|---|---|
| THE HAGUE | 27 APRIL 1992 | HERYET C.D. |

EPO FORM 1503 03.82 (P0401)